# EUROPEAN PATENT APPLICATION

(11) **EP 2 565 759 A1**
(43) Date of publication of application: **06.03.2013**
(21) Application number: 10850533.0
(22) Date of filing: 19.07.2010
(51) Int. Cl.: G06F 3/048

(54) **METHOD AND DEVICE FOR ADJUSTING LAYOUT OF CONTROL BUTTONS**

(30) Priority: 30.04.2010 CN 201010162994
(71) Applicant: ZTE Corporation, Shenzhen, Guangdong 518057 (CN)
(72) Inventor: ZUO, Yongli, Shenzhen Guangdong 518057 (CN); LI, Bin, Shenzhen Guangdong 518057 (CN)
(74) Representative: Price, Nigel John King
(86) International application number: PCT/CN2010/075266
(87) International publication number: WO 2011/134202

(57) **Abstract**

This disclosure provides a method and a device for adjusting layout of control buttons, used to solve the technical problem that the control buttons in a touch screen device cannot move, and cannot satisfy individual requirements of users. In this disclosure, the control buttons can be implemented with re-layout by receiving a command for adjusting positions of the control buttons, adjusting position information which is corresponding to the control buttons according to the command, saving a corresponding relationship between the adjusted position information and the control buttons, and loading and displaying the control buttons according to the corresponding relationship; thereby, the different and individual requirements of the users can be satisfied, the friendliness of an interface can be enhanced, and the experience quality of the users can be improved.

## Description

### Field of the Invention

This disclosure relates to the touch processing technical field, and in particular to a method and a device for adjusting layout of control buttons.

### Background of the Invention

With the rapid growth of multimedia information queries, people are paying more and more attention to the touch screen. By adopting the touch screen, users can realize operations of computers, smart phones and the like only through finger touch. Thereby, the human-machine interaction becomes more direct, and it is quite convenient for the users who cannot master the operations of the devices. Such a human-machine interaction mode provides a brand-new outlook for the multimedia, thus it is an extremely-attractive multimedia operation technology.

The touch screens are widely applied in our country, mainly focusing on the public information queries such as the service queries of Telecommunications Bureau, Tax Bureau, banks, Ministry of Electric Power and the like; and the information queries in urban streets. In addition, the touch screens are also applied in office works, industrial control, military command, electronic games, karaoke and ordering dishes, multimedia education program, pre-sale of real estate, and the like.

At present, in the devices which adopt the touch screen, the control buttons of the touch screen are all fixedly arranged in a screen display area. The display positions of the control buttons cannot be modified. Therefore, it is quite inconvenient for the users with special input habits. Additionally, as the display positions cannot be modified, the User Interface (UI) is also a little inflexible.

### Summary of the Invention

In order to solve the problem that the layout of the control buttons is inflexible, the embodiments of this disclosure provide a method and a device for adjusting the layout of the control buttons. The technical solution is as follows.

The method for adjusting the layout of the control buttons is applied in the touch screen devices, and comprises steps that:
the command for adjusting the positions of the control buttons is received;
the positions of the control buttons are adjusted according to the command;
the position information of the adjusted control buttons is saved, and the corresponding relationship between the position information and the control buttons is saved; and
the control buttons are loaded and displayed according to the corresponding relationship and the saved position information of the control buttons.

Furthermore, there are one or more control buttons.

Aiming at the different users, the method saves the position information of the control buttons corresponding to the user, and saves the corresponding relationship between the position information and the control buttons corresponding to the user, and loads the position information of the control buttons corresponding to the user, and displays the control buttons according to the loaded position information of the control buttons.

Furthermore, the method further comprises that: a background of any one of the control buttons is adjusted, and the background information of the adjusted control button is saved.

Furthermore, the method further comprises that: a background audio which is played when the control buttons are touched by the users is adjusted, and the adjusted background audio information when the control buttons are touched by the users is saved.

Based on the method, this disclosure further provides a device for adjusting layout of the control buttons, comprising:
a receiving unit, configured to receive a command for adjusting positions of the control buttons;
an adjustment unit, configured to adjust the positions of the control buttons according to the command;
a saving unit, configured to save adjusted position information of the control buttons, and save a corresponding relationship between the adjusted position information and the control buttons; and
a loading and displaying unit, configured to load and display the control buttons according to the corresponding relationship and the saved position information of the control buttons.

Furthermore, the device further comprises:
a switching unit, configured to, when switching users, load the position information of the control buttons corresponding to a user, and display the control buttons according to the loaded position information of the control buttons.

Furthermore, the device further comprises:
a background adjustment unit, configured to adjust a background of any one of the control buttons; and
the saving unit is further configured to save adjusted background information of the control buttons.

Furthermore, the device further comprises:
an audio adjustment unit, configured to adjust background audio which is played when the control buttons are touched by the user; and
the saving unit is further configured to save adjusted background audio information when the control buttons are touched by the user.

In the embodiments of this disclosure, the command for adjusting the positions of the control buttons is received, the position information corresponding to the control buttons is adjusted according to the command, the corresponding relationship between the adjusted position information and the control buttons is saved, and the control buttons are loaded and displayed according to the corresponding relationship. Thereby, re-layout of the control buttons can be implemented, and different individual requirements of the users can be satisfied. The friendliness of the interface can be enhanced, and the quality of the user's experience can be improved.

### Brief Description of the Drawings

Fig. 1 shows a flow diagram of the method for adjusting layout of the control buttons according to the embodiments of this disclosure;
Fig. 2 shows a detailed flow diagram of the method for adjusting layout of the control buttons according to the embodiments of this disclosure; and
Fig. 3 shows a structure chart of the device for adjusting layout of the control buttons according to the embodiments of this disclosure.

### Detailed Description of the Embodiments

By adopting the technical solution of this disclosure, re-layout of the control buttons can be implemented, the different individual requirements of the users can be satisfied, the friendliness of the interface can be enhanced, and the experience quality of the users can be improved.

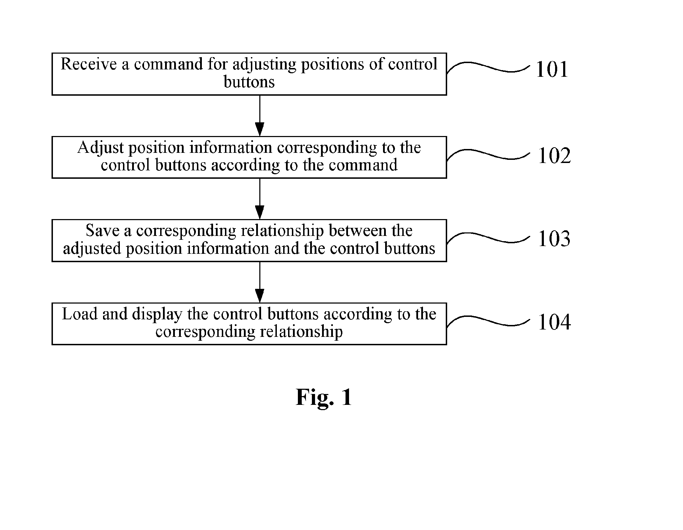

As shown in Fig. 1, the embodiments of this disclosure provide a method for adjusting layout of the control buttons, comprising the following steps.

Step 101, the command for adjusting positions of the control buttons is received.

Step 102, position information corresponding to the control buttons is adjusted according to the command.

Step 103, a corresponding relationship between the adjusted position information and the control buttons is saved.

Step 104, the control buttons are loaded and displayed according to the corresponding relationship.

Furthermore, the method further comprises that: when another user needs to adjust the control buttons, the control buttons are loaded and switched to display according to the corresponding relationship between the control buttons and the position information corresponding to the control buttons of another user.

Furthermore, the method further comprises that: the background of any one of the control buttons is adjusted.

Furthermore, the method further comprises that: the background audio which is played when the control buttons are touched by users is adjusted.

In the above, there are one or more control buttons.

The embodiments of this disclosure are described below in details by taking the dialing buttons on the touch screen of the mobile device as an example. However, the protection scope of this disclosure is not limited to this example. The method provided by this disclosure is further suitable for adjusting the layout of the control buttons of video games. It should be understood by those skilled in the art, the protection scope of this disclosure includes the mobile devices, and is not limited thereby. The method is suitable for all the adjustments for the layout of the control buttons on the touch screens.

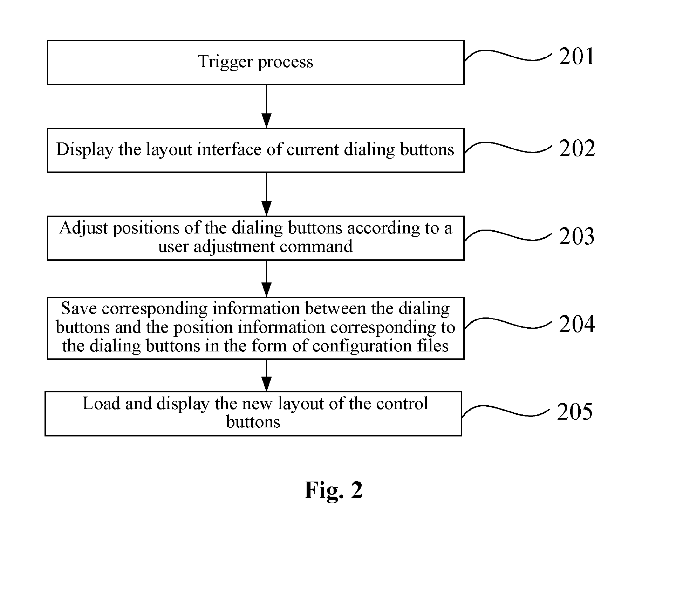

As shown in Fig. 2, the embodiments of this disclosure provide a method for adjusting layout of the control buttons, comprising the following steps.

Step 201, a process is triggered.

The process of modifying the positions of the dialing buttons can be triggered on any place of the touch screen according to the requirements. For example, a menu item can be added in a setting module. After clicking the menu item, the function of adjusting the dialing buttons can be realized.

Step 202, the layout interface of the current dialing buttons is displayed.

The mobile device provides a configuration file. Multiple configuration items can be added in the configuration file, and each of the configuration items saves the position configuration information of each dialing button on a dial plate which is configured by the user. In the configuration information, the display position of each dialing button on the touch screen is saved, and a unique configuration item in each of the configuration items of the configuration file is taken as a default configuration item.

After implementing the trigger process in Step 201, the configuration file is opened. The current default configuration item is read, the position of each dialing button on the touch screen is displayed according to the position information of each button in the configuration item, and the current default layout interface of dialing buttons is displayed.

Step 203, the positions of the dialing buttons are adjusted according to the user adjustment command.

In the related art, as the dialing buttons are fixed and unitary, the rapidly-increased experience needs cannot be satisfied. Such needs are that, such as, for users holding the mobile device by the left hand, and those holding the mobile device by the right hand, the layouts of dialing buttons are different; or, some users prefer the dialing buttons with the transverse layout, and some users prefer the dialing buttons with the vertical layout, and the like. Thereby, in order to satisfy the individual and different requirements of the users, the embodiments of this disclosure allow the users to click and drag the buttons on the dialing button interface, and adjust the position of each button. The positions of the dialing buttons can be randomly placed according to the requirements of the users. For example, the position of each button can be arranged to be a ring shape, a heart shape, shapes of special patterns, and the like. The mobile device can record the position of each dialing button.

Specifically, the initial positions of the buttons 0-9 are respectively A-J; after being adjusted by the users, the positions of the buttons 0-9 are respectively A1-J1.

Furthermore, in order to satisfy the individual requirements of the users and improve the experience of the users, the background of the dialing buttons can be adjusted. For example, the background of the dialing buttons can be adjusted to be portraits, natural landscapes and the like. For example, a background picture item is added in the configuration items of the configuration file, and the background pictures saved in the device form corresponding relationships to the dialing buttons respectively according to the command of the user. The background picture can be loaded and displayed during the display process of the dialing buttons.

Furthermore, in order to satisfy the individual requirements of the users and improve the quality of the user's experience, the background music which is played when the dialing buttons are touched by the users can be set, so that the music that the user likes can be played when the dialing buttons are touched. For example, a background audio item is added in the configuration items of the configuration file, and the background audios saved in the device form corresponding relationships to the dialing buttons respectively according to the command of the user. The audio is played when the dialing buttons are triggered.

After the user finishes adjusting the positions of the dialing buttons, the process of ending the adjustment of the button positions is triggered, and the user is prompted to decide whether to save the current modification. If the user decides to save the currently-adjusted position information of the dialing buttons, Step 204 is implemented; and if the user decides not to save the information, the process is ended.

Step 204, the corresponding information between the dialing buttons and the position information corresponding to the dialing buttons is saved in the form of configuration files.

The format of a configuration file in the form of the Extensible Markup Language (XML) is as follows:
<config>
   <Wang Yi
   default="true"
   btn_0_x="10"
   btn_0_y="10"
btn_1_x="15"
   btn_1_y="10"
btn_2_x="20"
   btn_2_y="10"
   .........
   />
<Zhang San
   default="false"
   btn_0_x="100"
   btn_0_y="100"
btn_1_x="150"
   btn_1_y="100"
btn 2 x="200"
   btn 2_y="100"
   .........
   />
   ...... </config>

In the above, Wang Yi and Zhang San are two types of button configuration items thereof, and configuration items comprise the following contents.
1) The position layout of the dialing buttons is implemented on the screen. For example, btn_0_x represents an x coordinate of the button "0" on the screen, and btn_0_y represents a y coordinate of the button 0" on the screen. In this way, the configuration items record the X and Y coordinates of all dialing buttons on the screen. The X and Y coordinates can take pixel as unit, but are not limited thereby.
2) Each configuration item has a default item which records whether the current configuration item is the default configuration item. For example, default="true" of the configuration item "Wang Yi" represents that the position of each button recorded corresponding to the configuration item "Wang Yi" is loaded when entering into the dialing interface next time. In each of the configuration items, there is only one unique configuration item, the corresponding default value of which is true.

Step 205, the new layout of the control buttons is loaded and displayed.

After establishing the self-defined button layout configuration, the users can trigger the interface switch on the dialing interface or in the menu item added by the setting module. The individual button layout configuration item is loaded. The loading process adopts a script analysis technology, which first analyzes the configuration item which has the default value true, and then reads the X and Y coordinate information of each button from the configuration item, displays each button on the corresponding position of the screen, and displays different layout effects.

In addition, in order to better satisfy the individual requirements of the users, multiple settings of the button layout by the users can be saved. When another user needs to use the mobile device, the switch operation can be performed. For example, one switch button set on the touch screen can realize the switch from the interface adopted by the current user to the individual interface adopted by another user.

Furthermore, based on the aforementioned embodiment, the layout interface configuration of "Wang Yi" is currently displayed, and the layout interface configuration of "Zhang San" is further stored in the configuration file of the mobile device. When "Zhang San" further needs to use the mobile device, the layout interface can be switched to be the individual layout interface via the switching button on the touch screen. Meanwhile, the default value corresponding to "Zhang San" is true, and the default value corresponding to "Wang Yi" is false.

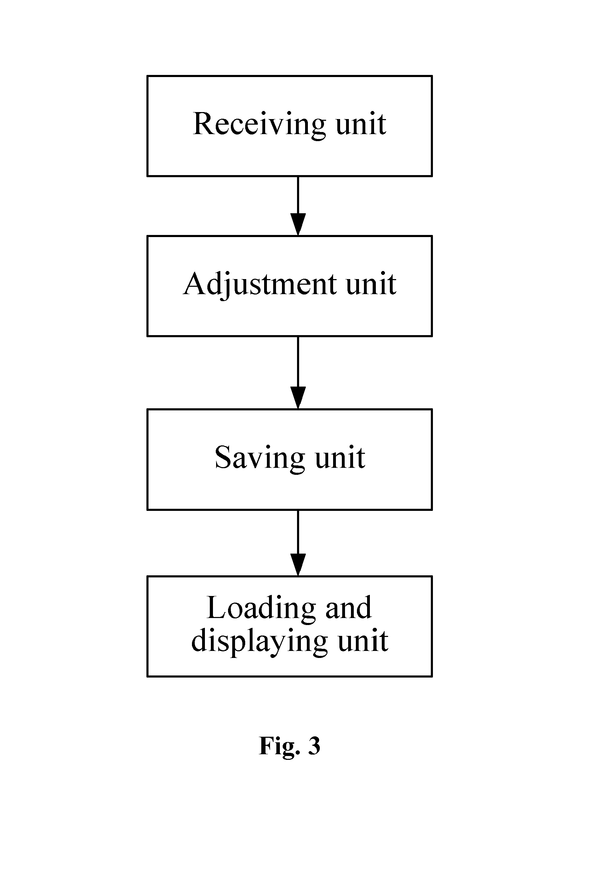

As shown in Fig. 3, the embodiments of this disclosure further provide a device for adjusting the layout of the control buttons, comprising:
a receiving unit, configured to adjust the command for adjusting the positions of the control buttons;
an adjustment unit, configured to adjust the positions of the control buttons according to the command;
a saving unit, configured to save the corresponding relationship between the adjusted position information and the control buttons; and
a loading and displaying unit, configured to load and display the control buttons according to the corresponding relationship.

Furthermore, the device further comprises: the switching unit, configured to load, switch and display the control buttons according to the corresponding relationship between the control buttons and the position information corresponding to the control buttons of another user, when another user needs to adjust the control buttons.

Furthermore, the device further comprises: the background adjustment unit, configured to adjust the background of any one of the control buttons. For example, a background picture item is added into the configuration items of the configuration file. According to the command of the user, the background pictures saved in the device form corresponding relationships to the dialing buttons respectively, and the background pictures are loaded and displayed during the display process of the dialing buttons.

Furthermore, the device further comprises: the audio adjustment unit, configured to adjust a background audio which is played when the control buttons are touched by the user. For example, a background audio item is added into the configuration items of the configuration file. According to the command of the user, the background audios saved in the device form corresponding relationships to the dialing buttons respectively, and the audio is played when the dialing buttons are triggered.

In the embodiments of this disclosure, the command for adjusting the positions of the control buttons is received, the position information corresponding to the control buttons is adjusted according to the command, the corresponding relationship between the adjusted position information and the control buttons is saved, and the control buttons are loaded and displayed according to the corresponding relationship. Thereby, re-layout of the control buttons can be implemented, and different individual requirements of the users can be satisfied. The friendliness of the interface can be enhanced, and the experience of the users can be improved.

Finally, it should be noted that the above embodiments are only used for describing the technical solution of this disclosure and are not intended to limit the scope of protection of this disclosure. Although this disclosure is described in details with reference to the preferred embodiments, those skilled in the art should know that any modifications, changes, equivalent replacements and the like within the spirit and scope of this disclosure and claims shall fall within the scope of protection of this disclosure.

## Claims

1. A method for adjusting layout of control buttons, **characterized in that** the method is applied in a touch screen device, and comprises:
receiving a command for adjusting positions of the control buttons;
adjusting the positions of the control buttons according to the command;
saving position information of the adjusted control buttons, and saving a corresponding relationship between the position information and the control buttons; and
loading and displaying the control buttons according to the corresponding relationship and the saved position information of the control buttons.

2. The method according to claim 1, **characterized in that** the method further comprises:
aiming at different users, saving the position information of the control buttons corresponding to a user, and saving the corresponding relationship between the position information of the control buttons and the control buttons corresponding to the user; and
aiming at the different users, loading the position information of the control buttons corresponding to the user, and displaying the control buttons according to the loaded position information of the control buttons.

3. The method according to claim 1, **characterized in that** the method further comprises:
adjusting a background of any one of the control buttons, and saving the background information of the adjusted control button.

4. The method according to claim 1, **characterized by** further comprising:
adjusting a background audio which is played when the control buttons are touched by the user, and saving adjusted background audio information when the control buttons are touched by the user.

5. The method according to claim 1, **characterized in that** there are one or more control buttons.

6. A device for adjusting layout of control buttons, **characterized by** comprising:
a receiving unit, configured to receive a command for adjusting positions of the control buttons;
an adjustment unit, configured to adjust the positions of the control buttons according to the command;
a saving unit, configured to save adjusted position information of the control buttons, and save a corresponding relationship between the adjusted position information and the control buttons; and
a loading and displaying unit, configured to load and display the control buttons according to the corresponding relationship and the saved position information of the control buttons.

7. The device according to claim 6, **characterized in that** the device further comprises:
a switching unit, configured to, when switching users, load the position information of the control buttons corresponding to a user, and display the control buttons according to the loaded position information of the control buttons.

8. The device according to claim 6, **characterized in that** the device further comprises:
a background adjustment unit, configured to adjust a background of any one of the control buttons; and
the saving unit is further configured to save adjusted background information of the control buttons.

9. The device according to claim 6, **characterized in that** the device further comprises:
an audio adjustment unit, configured to adjust a background audio which is played when the control buttons are touched by the user; and
the saving unit is further configured to save adjusted background audio information when the control buttons are touched by the user.

10. The device according to any one of claims 6 to 9, **characterized in that** there are one or more control buttons.
